# EUROPEAN PATENT APPLICATION

(11) **EP 4 717 064 A1**
(43) Date of publication of application: **01.04.2026**
(21) Application number: 25181777.1
(22) Date of filing: 10.06.2025
(51) Int. Cl.: A01D 34/00, B60L 1/00, G06V 20/10

(54) **A METHOD IN A SELF-PROPELLED ROBOTIC LAWNMOWER AND A SELF-PROPELLED ROBOTIC LAWNMOWER**

(30) Priority: 27.09.2024 SE 2450966
(71) Applicant: Husqvarna AB, 561 82 Huskvarna (SE)
(72) Inventor: Mansfeld, Pontus, 561 82 Huskvarna (SE); Juel, Jonas, 561 82 Huskvarna (SE)

(57) **Abstract**

The present disclosure relates to a method for operating a self-propelled robotic lawnmower 1. The lawnmower is configured to operate in a pseudo random pattern 35 in a work area 31, and comprises driving means 3, 61, processing means 63, and a camera 11. The method includes detecting 51 a rough grass patch condition, defined as an estimated ratio of uncut- to cut grass in the work area falling below a threshold. Then, a rough grass patch 37 is identified 53 using the camera, and the lawnmower steers towards and processes 55 the identified rough patch 37.

## Description

### Field of the invention

The present disclosure relates to a method in a self-propelled robotic lawnmower, being configured to operate in a pseudo-random pattern in a work area, and comprising driving means, processing means, and a camera.

The disclosure also concerns a corresponding self-propelled robotic lawnmower.

### Technical background

Such robotic lawnmowers are widely used to cut lawns. The use of a pseudo-random navigation model allows an entire lawn to be covered without significant computing and navigation capabilities and is appreciated by many users since a 'stripy' lawn appearance can be avoided.

One problem associated with such robotic lawnmowers is that the efficiency is low relative to if the lawn is cut in an organized pattern of some sort, where it is avoided that the robotic lawnmower moves over already processed areas.

### Summary of the invention

One object of the present disclosure is therefore to provide a more efficient robotic lawnmower of the above-mentioned kind.

This object is achieved by means of a method as defined in claim 1. More specifically, in a method of the initially mentioned kind, the robotic lawnmower detects a rough grass patch condition, defined as an estimated ratio of uncut- to cut grass in the work area falling below a threshold. Rough grass patches are identified using the camera; and the robotic lawnmower steers towards and processes the identified rough patches.

This serves to provide a more efficient cutting while maintaining the non-stripy appearance of the lawn, since the robotic lawnmower targets the remaining rough patches when they are so rare and small that the processing efficiency has dropped significantly using the pseudo-random pattern.

Typically, the ratio threshold of uncut- to cut grass in the work area may be less than 0.5, and more preferred less than 0.2.

The detecting of a rough grass patch condition may be based on the surface area of the work area and the amount of processing time during a time period. Alternatively, the detecting of a rough grass patch condition may be based on input from the camera.

To further increase the processing efficiency, the steering towards and processing an identified rough patch may be done based on a list of positions with identified rough patches. This may be done along a determined path in the work area, allowing processing of multiple identified rough patches.

The present disclosure also considers a corresponding self-propelled robotic lawnmower. Then, the robotic lawnmower is configured to carry out the steps of the above-described method and the variations thereof.

### Brief description of the drawings

Fig 1 shows a self-propelled robotic lawnmower.
Fig 2 illustrates a self-propelled robotic lawnmower processing a work area.
Fig 3 illustrates a pseudo-random path of a self-propelled robotic lawnmower moving over the work area.
Fig 4 shows a corresponding cutting pattern.
Fig 5 illustrates rough grass patches remaining after the cutting of fig 4.
Fig 6 illustrates rough grass patches remaining at a later stage.
Fig 7 illustrates schematically a method according to the present disclosure.
Fig 8 illustrates one scheme for targeting remaining rough patches using saved patch positions.
Fig 9 illustrates components of a robotic lawnmower.

### Detailed description

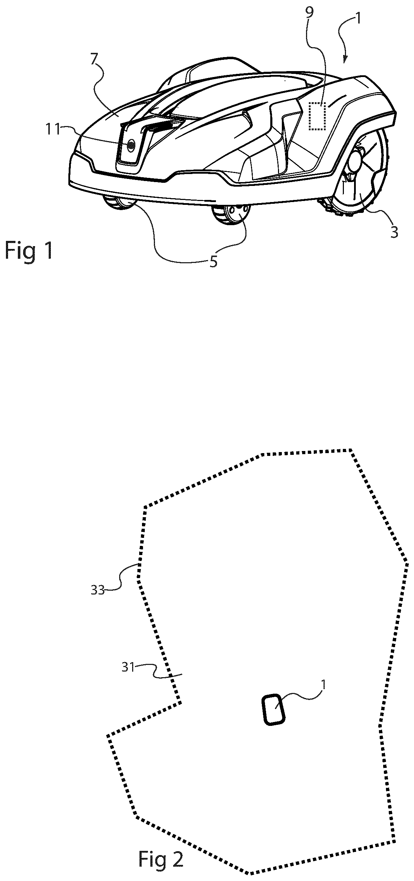

Self-propelled robotic lawnmowers 1, as shown with an example in fig 1, have become widely used. Such lawnmowers 1 often include rear driving wheels 3 and front swiveling wheels 5 although other configurations are available. Enclosed under a cover 7 are a driving motor and a cutting implement, neither of which are visible in fig 1, and the driving and cutting is controlled by a control unit 9. The robotic lawnmower is provided with a camera 11 that can be used to avoid obstacles such as gardening tools, toy or even pets that can be left on the lawn. This camera 11 will be used also for other purposes in this disclosure as will be discussed.

Typically, as illustrated in fig 2, the robotic lawnmower 1 is configured to operate within a work area 31. This can be accomplished by providing a boundary cable at the boundary 33 of the work area 31. The robotic lawnmower 1 may then be configured to sense a signal applied on the boundary cable in the proximity thereof and alter its heading, such that it remains within the work area 31.

It is also possible to provide the robotic lawnmower 1 with enhanced satellite navigation technology or similar to make it capable of remaining within the work area 31 without a boundary cable.

Robotic lawnmowers 1 often operate in a pseudo-random pattern. By a pseudo-random pattern is meant a pattern that is at least meant to appear random in contrast to for instance mowing in parallel lines or concentric circles.

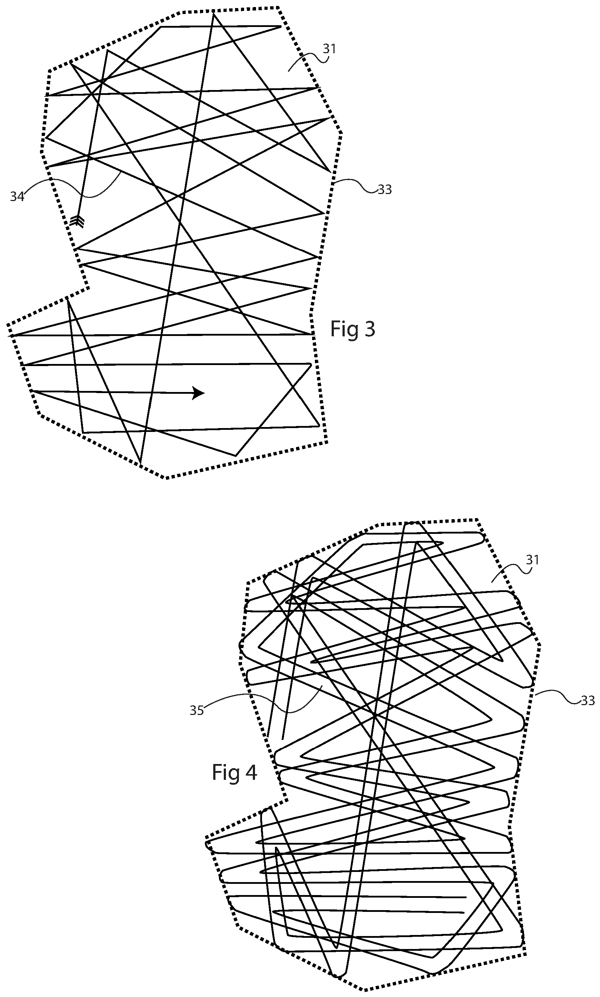

In legacy-type robotic lawnmowers pseudo-random patterns were a result of using a simple navigating method. Fig 3 illustrates such a pseudo-random path 34 of a self-propelled robotic lawnmower 1 moving over the work area 31. Then the robotic lawnmower moves 1 in straight line until it reaches the boundary or another type of obstacle (not shown). At this point, the robotic lawnmower 1 changes its heading in what appears to be a random fashion but in such a way that the subsequent forward motion will be directed away from the boundary 33 or the obstacle. The pseudo-random change of direction may be accomplished by choosing consecutive angles in a list of angles for changing directions. This will appear random to a casual observer. It would also be possible to generate a direction change using a random number algorithm, but this is not necessary.

Although used consistently in fig 3, it is not necessary that the robotic lawnmower moves in a straight line between the boundaries; it may also move in a curved or zigzag pattern, for instance.

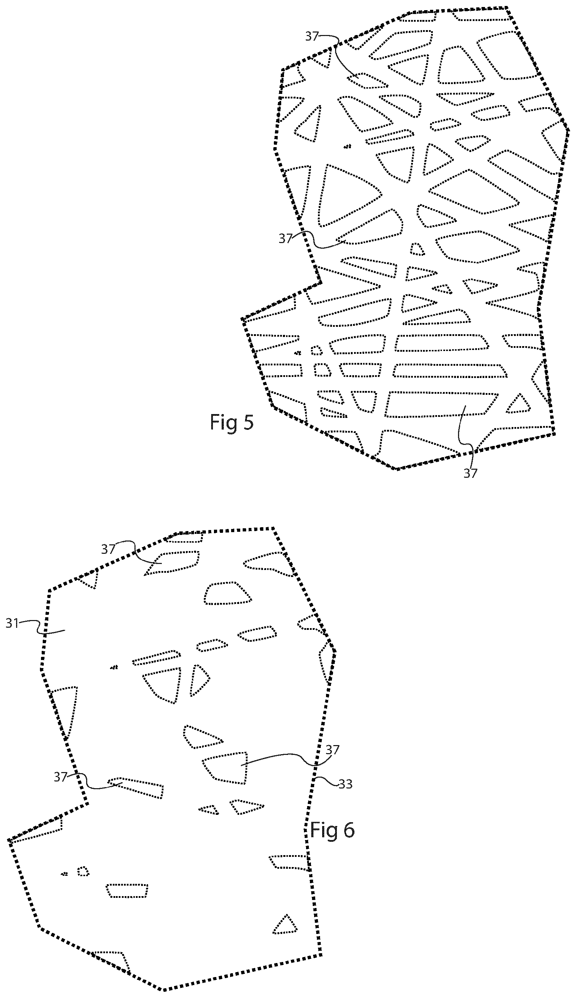

Fig 4 shows a corresponding cutting pattern 35 of the movement in fig 3 and fig 5 illustrates rough grass patches 37 remaining after the cutting of fig 4. As the robotic lawnmower frequently will pass recently already cut areas, this way of covering the work area will often be less efficient than moving in an ordered fashion. However, this is still preferred by many users since it avoids the stripy look that a traditionally manually cut lawn often has when being cut in parallel lines.

Fig 6 illustrates the lawn of fig 5 at a later stage, when the robotic lawnmower has continued its processing for a longer time. At this stage, fewer rough grass patches 37 remain. This however means that the probability, at each moment, that the robotic lawnmower will process an uncut, rough grass patch decreases, and the last remaining patches 37 may be uncut for a long time while the robotic lawnmower processes already cut areas.

The present disclosure is occupied with improving the robotic lawnmower's operation in such circumstances.

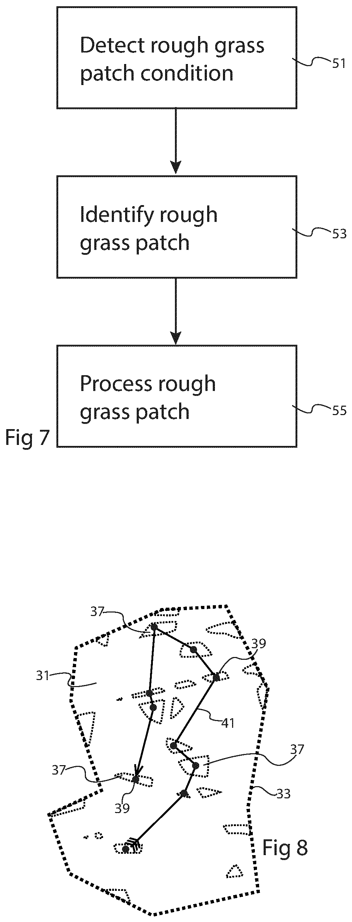

This may be accomplished by a method for operating a self-propelled robotic lawnmower of the above-described type as is schematically outlined in the flow chart of fig 7.

Then, during processing of the lawn in the work area 31, the robotic lawn mower detects 51 whether the lawn is in a rough grass patch condition. This rough grass patch condition may be defined as an estimated ratio of uncut- to cut grass in the work area falling below a threshold. That is, the robotic lawn mower decides whether the lawn is in the condition where it has a number of rough patches, but those are relatively small, few and likely far apart, such that a continuation of processing in a pseudo-random pattern would be inefficient. Typically, this would be the case if the ratio threshold of uncut- to cut grass in the work area is less than 0.5 or more preferred less than 0.2. Thus, likely closer to the condition illustrated in fig 6 than to the condition in fig 5.

There are different options for detecting such a condition. In a more primitive case, the robotic lawn mower can simply measure the time it has been processing the lawn since the operation began or during a predetermined time window, e.g. a few days. Thus, for instance if the robotic lawnmower begins processing a lawn that has had a significant growth, it may determine the number of cutting hours during the last week. The robotic lawnmower then defines a processing time threshold needed to reach the rough grass patch condition which may be calculated based on the total work area size, for instance. If the number of cutting hours exceeds this threshold, it may be estimated that the lawn is in a rough grass patch condition.

Alternatively, the camera 11 cf. fig 1 may be used to detect the rough grass patch condition. This can be accomplished with an image analysis algorithm that estimates the rough grass patch area percentage from the image data produced as the robotic lawnmower moves over the work area 31.

Once a rough grass patch condition has been detected as outlined above, the robotic lawnmower can begin processing the remaining rough grass patches 37 in a more structured manner, by entering a hunting mode, where it actively finds and processes rough patches 37.

This is done by identifying 53 a rough grass patch 37 using the camera of the robotic lawnmower and steering towards and processing 55 the identified rough patch 37.

It should be noted that different schemes can be outlined also for this phase of the method. It may be possible to identify a rough grass patch 37 and process the same on the fly using the camera 11 once the rough grass patch condition has been detected. In this case, the pseudo-random navigation may be continued, but as soon as a rough patch 37 appears in the camera's view, the robotic lawnmower can change its heading and process the patch.

Another alternative, illustrated in fig 8, which is useful if the robotic lawnmower has enhanced satellite navigation capabilities, is to collect, using the camera 11, a list of positions 39 of rough patches 37 as the initial pseudo-random navigation takes place. Once the robotic lawnmower finds itself in the rough patch condition, it may define a path 41 that covers a number of those positions 39 in an efficient manner and process the patches along the path 41. Therefore, the order of the first two steps in fig 7 may in principle be reversed. Needless to say, while following a path 41 as illustrated in fig 8, the robotic lawnmower may identify additional rough patches and may process those at once or save their positions for later processing.

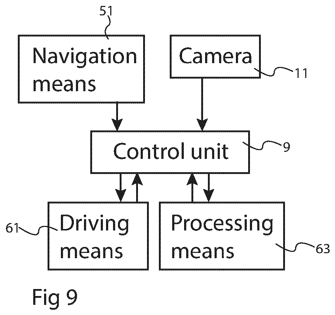

Fig 9 illustrate features of a self-propelled robotic lawnmower 1 configured to carry out the above-described method. Generally, the lawnmower comprises driving means 61, including the aforementioned driving wheels 3, and processing means 63, such as a cutting disc for cutting the lawn. Further, a camera 11 is provided as already discussed. The lawnmower 1 has a control unit 9 and is configured to operate in a pseudo-random pattern in a work area using navigation means 51 that may be configured as a sensor for detecting a boundary wire or a satellite navigation unit or both.

Satellite navigation may be enhanced with real-time kinematics, RTK, features or similar. Other conceivable navigation techniques include VSLAM and LONA/AIM-technologies. The control unit 9 is configured to detect a rough grass patch condition as discussed above, for instance by measuring the processing time or using input from the camera 11. Once a rough grass patch condition has been detected, a rough grass patch can be identified, using the camera 11, by the control unit 9 which steers towards and processes the identified rough patch. The camera 11 can be combined with for instance a radar device assisting with detecting a rough grass patch. It is noted that feedback from the driving and processing means 61, 63 can be used as feedback in this step, since driving resistance and cutting implement resistance can be used to assess whether rough patches are being processed.

The present disclosure is not restricted to the above-described examples and may be varied and altered in different ways within the scope of the appended claims.

## Claims

1. A method for operating a self-propelled robotic lawnmower (1), the lawn mower being configured to operate in a pseudo-random pattern (35) in a work area (31), and comprising driving means (3, 61), processing means (63), and a camera (11), the method **characterized by:**
- detecting (51) a rough grass patch condition, defined as an estimated ratio of uncut- to cut grass in the work area (31) falling below a threshold;
- identifying (53) a rough grass patch (37) using the camera; and
- steering towards and processing (55) the identified rough patch (37).

2. Method according to claim 1, wherein the ratio threshold of uncut- to cut grass in the work area is less than 0.5.

3. Method according to claim 2, wherein the ratio threshold of uncut- to cut grass in the work area is less than 0.2.

4. Method according to any of the preceding claims, wherein the detecting of a rough grass patch condition is based on the surface area of the work area (31) and the amount of processing time during a given time period.

5. Method according to any of the preceding claims, wherein the detecting of a rough grass patch condition is based on input from the camera (11).

6. Method according to any of the preceding claims, wherein the steering towards- and processing of an identified rough patch is done based on a list of positions (39) with identified rough patches (37).

7. Method according to claim 6, wherein the steering towards- and processing an identified rough patch is done along a path (41) allowing processing of multiple identified rough patches (37).

8. A self-propelled robotic lawnmower (1) comprising driving means (3, 61), processing means (63), and a camera (11), and being configured to operate in a pseudo random pattern in a work area (31), **characterized by:** being configured to
detect a rough grass patch condition, defined as an estimated ratio of uncut- to cut grass in the work area falling below a threshold,
identify, once a rough grass patch condition has been detected, a rough grass patch (37) using the camera (11); and
steer towards and process the identified rough patch.

9. Self-propelled robotic lawnmower (1) according to claim 8, wherein the ratio threshold of uncut- to cut grass in the work area is less than 0.5.

10. Self-propelled robotic lawnmower (1) according to claim 9, wherein the ratio threshold of uncut- to cut grass in the work area is less than 0.2.

11. Self-propelled robotic lawnmower (1) according to any of claims 8-10, wherein the detecting of a rough grass patch condition is based on the surface area of the work area (31) and the amount of processing time during a given time period.

12. Self-propelled robotic lawnmower (1) according to any of claims 8-11, wherein the detecting of a rough grass patch condition is based on input from the camera (11).

13. Self-propelled robotic lawnmower (1) according to any of claims 8-12, wherein the steering towards- and processing of an identified rough patch is done based on a list of positions with identified rough patches (37).

14. Self-propelled robotic lawnmower (1) according to claim 13, wherein the steering towards- and processing an identified rough patch is done along a path (41) allowing processing of multiple identified rough patches (37).
